# EUROPÄISCHE PATENTSCHRIFT

(11) **EP 2 060 439 B1**
(45) Veröffentlichungstag und Bekanntmachung des Hinweises auf die Patenterteilung: **11.01.2012**
(21) Anmeldenummer: 08018853.5
(22) Anmeldetag: 29.10.2008
(51) Int. Cl.: B60N 3/10

(54) **Halter für einen Getränkebehälter**
Holder for a drinks container
Support de réservoir de boissons

(30) Priorität: 15.11.2007 DE 102007054488
(43) Veröffentlichungstag der Anmeldung: 20.05.2009
(73) Patentinhaber: fischer automotive systems GmbH & Co. KG, 72160 Horb (DE)
(72) Erfinder: Schaal, Falk, 72275 Alpirsbach (DE)

(56) Entgegenhaltungen:
- WO-A1-2008/000404
- DE-A1- 19 935 144
- GB-A- 2 379 203

## Beschreibung

Die Erfindung betrifft einen Halter für einen Getränkebehälter mit den Merkmalen des Oberbegriffs des Anspruchs 1. Er dient zum kippsicheren Halten eines Getränkebehälters wie beispielsweise einer Getränkedose, eines Bechers, einer Tasse oder einer Flasche in einem Kraftwagen und ist zum Einbau in beispielsweise einer Mittelkonsole auf einem Kardantunnel des Kraftwagens vorgesehen. Die Erfindung ist nicht auf den genannten Verwendungszweck beschränkt.

Ein derartiger Halter ist bekannt aus dem Gebrauchsmuster DE 93 08 232 U1. Der bekannte Halter ist zum Einbau in einem flachen Fach oben in einem Handschuhfach eines Kraftwagens vorgesehen. Er ist mittels eines Schiebers schubladenartig ausfahrbar. Der bekannte Halter weist eine in Draufsicht rechteckige oder quadratische Platte mit einem kreisförmigen Loch als Einstellöffnung für einen Getränkebehälter auf. Die Platte kann wegen des Lochs als Ring aufgefasst werden, sie bildet eine Stütze, die einen eingestellten Getränkebehälter am Umfang abstützt. Die die Stütze bildende Platte des bekannten Halters ist an einem Rand um eine horizontale Achse schwenkbar gelagert und dadurch aus einer abgesenkten in eine angehobene Stellung und umgekehrt bewegbar. In der abgesenkten Stellung der die Stütze bildenden Platte ist der bekannte Halter niedrig und dadurch in einen flachen Einbauraum einschiebbar. In der angehobenen Stellung weist der bekannte Halter eine ausreichende Stützhöhe zum Halten eines eingestellten Getränkebehälters auf.

Aus der Patentanmeldung GB 2 379 203 A ist ein Halter für einen Getränkebehälter bekannt, mit einer ersten Stütze, die aus einer abgesenkten in eine angehobene Stellung und umgekehrt bewegbar ist. Die erste Stütze stützt in der angehobenen Stellung einen in den Halter eingestellten Getränkebehälter seitlich an einer Stelle ab. Der Halter weist zudem eine zweite Stütze auf, die ebenfalls aus einer abgesenkten in eine angehobene Stellung und umgekehrt bewegbar ist. Auch die zweite Stütze stützt den eingestellten Getränkebehälter ab.

Aus DE 199 35 144 ist ein Halter mit den Markmalen des Oberbegniffs des Anspruchs, 1 bekannt.

Aufgabe der Erfindung ist, einen alternativen Halter für einen Getränkebehälter vorzuschlagen, der bei Nichtgebrauch in eine Stellung mit kleiner Bauhöhe verbringbar ist und bei Gebrauch eine ausreichende Stützhöhe zum kippsicheren Halten eines eingestellten Getränkebehälters aufweist.

Diese Aufgabe wird erfindungsgemäß mit den Merkmalen des Anspruchs 1 gelöst. Der erfindungsgemäße Halter weist eine erste und eine zweite Stütze auf, die beide aus einer abgesenkten in eine angehobene Stellung und umgekehrt bewegbar sind. Außer Schwenklagerungen sind auch andere Führungen, beispielsweise Schiebeführungen, zu der zwischen der abgesenkten und der angehobenen Stellung auf- und abbewegbaren Führung der beiden Stützen möglich. In der angehobenen Stellung stützen die beiden Stützen einen eingestellten Getränkebehälter an zwei Stellen seines Umfangs seitlich ab. Die seitliche Abstützung erfolgt an so vielen Stellen des Umfangs und/oder erstreckt sich soweit in Umfangsrichtung, dass der eingestellte Getränkebehälter gegen Kippen in allen Richtungen abgestützt ist. Eventuell können die beiden Stützen mit weiteren Stützen oder seitlich neben dem Halter nach oben ragenden Bauteilen, die den eingestellten Getränkebehälter seitlich abstützen, zusammenwirken. Es ist also nicht zwingend, allerdings bevorzugt, dass ausschließlich die beiden Stützen den eingestellten Getränkebehälter seitlich abstützen. In der abgesenkten Stellung weist der Halter eine kleine Bauhöhe auf.

Gemäß der Erfindung sind die beiden Stützen antriebsverbunden, beim Anheben der zweiten Stütze hebt diese die erste Stütze mit an und/oder umgekehrt senkt die zweite Stütze beim Absenken die erste Stütze mit ab. Die erste Stütze wird deswegen nachfolgend auch als angetriebene Stütze und die zweite Stütze als antreibende Stütze bezeichnet werden.
Außerdem weist der erfindungsgemäße Halter ein Sperrelement auf, das die erste Stütze in der angehobenen und/oder in der abgesenkten Stellung gegen eine Bewegung sperrt. Das Sperrelement wird durch Anheben und/oder Absenken der zweiten Stütze entsperrt, womit gemeint ist, dass die Sperrung der ersten Stütze durch das Anheben und/oder Absenken der zweiten Stütze aufgehoben wird. Die erste Stütze ist dadurch mit der zweiten Stütze antreibbar. Das Sperrelement kann beispielsweise ein Schieber oder eine Klinke sein, der/die federbeaufschlagt in Eingriff mit der ersten Stütze tritt und diese dadurch gegen Bewegung sperrt. An einer Ausrückfläche, beispielsweise einer Schräge, drückt die zweite Stütze das Sperrelement gegen die Kraft des Federelements außer Eingriff von der ersten Stütze.

Die Antriebsverbindung der beiden Stützen weist erfindungsgemäß ein Bewegungsspiel auf. Die beiden Stützen sind mittels eines Federelements oder eines gummielastischen Elements elastisch miteinander verbunden. Durch das Bewegungsspiel lässt sich die erste Stütze ein Stück weit anheben und/oder absenken ohne die zweite Stütze mit anzuheben und/oder mit abzusenken. Auf diese Weise wird das Sperrelement zu Beginn des Anhebens und/oder Absenkens der ersten Stütze entsperrt, bevor sich die zweite Stütze mit der ersten Stütze mitbewegt. Das erfindungsgemäß vorgesehene Bewegungsspiel zwischen den beiden Stützen ermöglicht also eine Bewegung zuerst nur der ersten Stütze, die zum Entsperren der zweiten Stütze notwendig ist.

Die Erfindung hat die bereits genannten Vorteile einer bei Nichtgebrauch kleinen Bauhöhe und einer trotzdem ausreichenden Stützhöhe zum kippsicheren Halten eines eingestellten Getränkebehälters. Zum Anheben und Absenken der beiden Stützen muss nur die zweite Stütze bewegt werden, die erste Stütze bewegt sich mit der zweiten Stütze mit. Das Sperrelement verhindert ein unbeabsichtigtes Absenken der ersten Stütze, die erste Stütze lässt sich nur durch Absenken der zweiten Stütze absenken.

Eine Ausgestaltung der Erfindung sieht vor, dass das Sperrelement durch kräftiges Nachuntendrücken der angehobenen ersten Stütze überdrückbar ist. Unter "Überdrücken" ist zu verstehen, dass die an sich gegen Niederdrücken gesperrte erste Stütze durch entsprechend kräftigen Druck doch entsperrt wird und niedergedrückt, d. h. abgesenkt werden kann. Dadurch wird eine Beschädigung durch übermäßig hohen Druck auf die angehobene erste Stütze vermieden.

Eine Ausgestaltung der Erfindung sieht eine Arretierung gegen eine selbsttätige Bewegung der zweiten, also der antreibenden Stütze vor. Die Arretierung kann beispielsweise durch Reibung, also Bremsung der zweiten Stütze, einen Kugelfedermechanismus oder eine Federzunge mit einem halbkugel- oder dreieckszahnförmigen Kopf als Schnappmechanismus erfolgen.

Eine Ausgestaltung der Erfindung sieht vor, dass ein Abstand der beiden angehobenen Stützen voneinander verstellbar ist. Die Abstandsverstellung ist möglich durch eine Bewegung einer der beiden Stützen, wobei es sich jedenfalls bei einer Schwenklagerung um eine Weiterbewegung über die angehobene Stellung hinaus handeln kann. Durch Verstellung des Abstands der beiden Stützen ist eine Anpassung des Halters an Getränkebehälter unterschiedlichen Durchmessers möglich.

Eine Ausgestaltung der Erfindung sieht ein Schwenklager zur bewegbaren Führung aus der abgesenkten in die angehobene Stellung und umgekehrt für mindestens eine der beiden Stützen vor. Ein Schwenklager ist eine einfache und zuverlässige Führungsmögllchkeit, die nicht zu einem Klemmen durch Verkanten neigt. Eine Weiterbildung sieht vor, dass beide Stützen ein Schwenklager zu ihrer Führung aufweisen, wobei sich die Schwenklager beider Stützen auf derselben Seite eines in den Halter eingestellten Getränkebehälters befinden. Insbesondere sind die beiden Schwenklager gleichachsig. Diese Ausgestaltung der Erfindung ermöglicht eine Lagerung beider Stützen auf einer gemeinsamen Welle. Außerdem erleichtert eine gleichachsige Schwenklagerung oder zumindest nahe beieinander angeordnete Schwenklager die Antriebsverbindung der beiden Stützen.

In bevorzugter Ausgestaltung der Erfindung ist die erste Stütze ein Ring oder zumindest ein Teilring, der einen eingestellten Getränkebehälter vollständig oder zumindest auf einem Teil seines Umfangs, der vorzugsweise größer als der halbe Umfang ist, umschließt. Dadurch ist mit zwei gleichachsig schwenkbar gelagerten Stützen eine kippsichere Halterung eines Getränkebehälters möglich. Nicht notwendig ist eine Kreisform oder ein kreisförmiges Loch des Rings.

Die Erfindung wird nachfolgend anhand eines in der Zeichnung dargestellten Ausführungsbeispiels näher erläutert. Es zeigen:
- Figuren 1 - 3: einen Schnitt in einer Mittelebene eines Halters gemäß der Erfindung in drei verschiedenen Stellungen; und
- Figuren 4 und 5: einen Schnitt des Halters in einer parallel zur Seite versetzten Ebene in Figuren 1 und 2 entsprechenden Stellungen.

Der in der Zeichnung darstellte, erfindungsgemäße Halter 1' dient zum Einstellen und kippsicheren Halten eines nicht dargestellten Getränkebehälters wie beispielsweise einer Getränkedose, eines Bechers, einer Tasse oder einer Flasche im Innenraum eines Kraftwagens. Der Halter 1 ist zum Einbau in beispielsweise eine Mittelkonsole auf einem Kardantunnel des Kraftwagens vorgesehen.

Der Halter 1 weist ein flaches, schachtelförmiges und oben offenes Gehäuse 2 auf, in dem eine erste Stütze 3 angeordnet ist. Die erste Stütze 3 hat die Form eines Rings, d. h. sie hat eine von oben gesehen ungefähr kreisförmige Einstellöfnung 4 für den nicht dargestellten Getränkebehälter. Der Außenumfang des die erste Stütze 3 bildenden Rings ist in Draufsicht näherungsweise rechteckig mit konvex gewölbten Seiten und gerundeten Ecken.

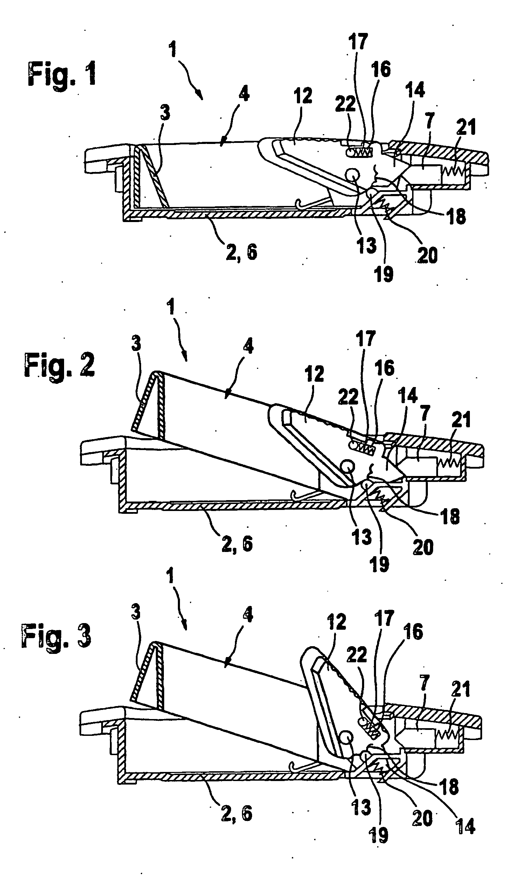

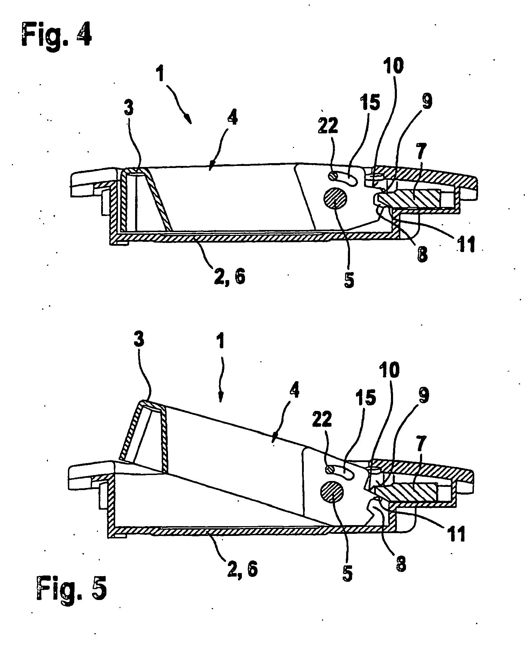

Außerhalb der Einstellöffnung 4 weist die erste Stütze 3 ein Schwenklager 5 auf (siehe Figuren 4 und 5), dessen gedachte Schwenkachse tangential zur Einstellöffnung 4 und horizontal, d. h. parallel zu einem Boden 6 des Gehäuses 2 verläuft. Das Schwenklager 5 umfasst ein durchgehendes Lagerloch in der ersten Stütze 3 und seitlich von außen in das Lagerloch eingreifende Wellenstummel des Gehäuses 2. Das Lagerloch und die Wellenstummel des Schwenklagers 5 sind nicht mit eigenen Bezugszahlen versehen. Mittels des Schwenklagers 5 ist der die erste Stütze 3 bildende Ring aus einer in Figuren 1 und 4 dargestellten, abgesenkten Stellung in eine in Figuren 2, 3 und 5 dargestellte angehobene Stellung und umgekehrt bewegbar, d. h. schwenkbar geführt. In der abgesenkten Stellung liegt die erste Stütze 3 im Gehäuse 2 ein und schließt mit dessen Oberseite bündig ab. In der angehobenen Stellung steht die Stütze 3 schräg nach oben aus dem Gehäuse 2 vor.

Auf der Seite des Schwenklagers 5 ist außerhalb der als Ring ausgebildeten ersten Stütze 3 ein Schieber als Sperrelement 7 im Gehäuse 2 angeordnet. Das Sperrelement 7 ist radial zur gedachten Schwenkachse des Schwenklagers 5 verschiebbar. Ein Federelement 21 in Form einer Schraubendruckfeder beaufschlagt den Schieber in Richtung der ersten Stütze 3. In der abgesenkten Stellung der ersten Stütze 3 greift das Sperrelement 7 in eine hier als Maul 8 bezeichnete, nutförmige Ausnehmung der ersten Stütze 3 ein. Eine Wange des Mauls 8 liegt auf einer ersten Sperrfläche 9 an der Oberseite des Sperrelements 7 auf. Die erste Sperrfläche 9 verläuft radial zur gedachten Schwenkachse des Schwenklagers 5, so dass das Sperrelement 7 die erste Stütze gegen Anheben sperrt.

In der nach oben geschwenkten, d. h. angehobenen Stellung liegt die erste Stütze 3 mit einer Stufe 10 an einer zweiten Sperrfläche 11 des Sperrelements 7 an und ist dadurch gegen ein Absenken, d. h. gegen ein Schwenken nach unten gesperrt. Die in Figuren 4 und 5 zu sehenden ersten und zweiten Sperrflächen 9, 11 des als Schieber ausgebildeten Sperrelements 7 und das Maul 8 der ersten Stütze 3 sind jeweils in Seitenbereichen seitlich neben einer nachfolgend zu erläuternden zweiten Stütze 12 ausgebildet

Die zweite Stütze 12 ist in Figuren 1 - 3 in Seitenansicht dargestellt. Sie ist in einer Unterbrechung der als Ring ausgebildeten ersten Stütze 3 auf der Seite, auf der sich das Schwenklager 5 befindet, angeordnet Die zweite Stütze 12 ragt ein Stück weit in die Einstellöffnung 4 der ersten Stütze 3 hinein. Die zweite Stütze 12 ist in Seitenansicht näherungsweise dreiecksförmig, wobei die "Spitze" gerundet oder abgeflacht und in die Einstellöffnung 4 gerichtet ist.

Die zweite Stütze 12 weist ein Schwenklager 13 auf, das mit dem Schwenklager 5 der ersten Stütze 3 gleichachsig ist. Eine Welle, die in dem Ring, der die erste Stütze 3 bildet, aufgenommen ist, durchgreift ein Lagerloch, das durch die zweite Stütze 12 durchgeht. Die Welle und das Lagerloch bilden das Schwenklager 13 der zweiten Stütze 12, die Welle und das Lagerloch des Schwenklagers 13 sind nicht mit eigenen Bezugszahlen versehen. Wie die erste Stütze 3 ist die zweite Stütze 12 aus einer abgesenkten, in Figur 1 dargestellten Stellung, in eine angehobene, in Figur 2 dargestellte Stellung nach oben und umgekehrt schwenkbar. Oberseiten der beiden Stützen 3, 12 sind in etwa bündig, wenn beide Stützen 3, 12 abgesenkt oder angehoben sind.

An ihrer dem Sperrelement 7 zugewandten Außenseite weist die zweite Stütze 12 eine dreiecksförmige Nase 14 auf, die parallel zur gedachten Achse des Schwenklagers 13 verläuft. Die Nase 14 wirkt mit dem als Schieber ausgebildeten Sperrelement 7 zusammen, dessen der Nase 14 zugewandte Seite im Bereich der Nase 14 ebenfalls dreiecksförmig ist Die Nase 14 und der mit ihr zusammenwirkende dreiecksförmige Bereich des Sperrelements 7 befinden sich in einem mittleren Bereich des Sperrelements 7 zwischen den in Figuren 4 und 5 zu sehenden ersten und zweiten Sperrflächen 9, 11, die in Seitenbereichen des Sperrelements 7 ausgebildet sind.

Beim Anheben der zweiten Stütze 12 aus der abgesenkten Stellung drückt die Nase 14 aufgrund ihrer Dreiecksform das Sperrelement 7 gegen die Kraft des Federelements 21 nach außen, so dass das Sperrelement 7 außer Eingriff vom Maul 8 der ersten Stütze 3 gelangt. Die erste Stütze 3 wird also durch Anheben der zweiten Stütze 12 entsperrt und kann ebenfalls angehoben werden.

Beim Absenken der zweiten Stütze 12 aus der angehobenen Stellung drückt die Nase 14 aufgrund ihrer Dreiecksform in gleicher Weise das Sperrelement 7 gegen die Kraft des Federelements 21 außer Eingriff, in diesem Fall von der Stufe 10 der ersten Stütze 3, so dass die erste Stütze 3 entsperrt ist und abgesenkt werden kann. Festzuhalten ist, dass die zweite Stütze 12 durch Anheben und Absenken die erste Stütze 3 entsperrt.

Die erste Stütze 3 ist mit der zweiten Stütze 12 antriebsverbunden: Zur Antriebsverbindung durchgreift ein Stift 22 Langlöcher 15, 16 in beiden Stützen 3, 12. Der Stift 22 und die Langlöcher 15, 16 verlaufen parallel zu den gedachten Achsen der Schwenklager 5, 13. Außerdem erstreckt sich das Langloch in der ersten Stütze 3, wie in Figuren 4 und 5 zu sehen, kreisbogenförmig um die Schwenkachse des Schwenklagers 5. Das Langloch 16 in der zweiten Stütze 12 verläuft tangential zur gedachten Achse des Schwenklagers 13. Durch die Beweglichkeit des Stifts 22 in den Langlöchern 15, 16 ist ein Bewegungsspiel gegeben, die beiden Stützen 3, 12 sind um einen begrenzten Weg bzw. Winkel relativ zueinander bewegbar bzw. schwenkbar. Das Bewegungsspiel reicht aus, dass die zweite Stütze 12 soweit verschwenkt werden kann, dass sie die erste Stütze 3 entsperrt. Durch ein Federelement 17, das den Stift 22 beaufschlagt, sind die beiden Stützen 3, 12 elastisch miteinander verbunden und bewegen sich gemeinsam, wenn die erste Stütze 3 entsperrt ist. Der Stift 22, das Federelement 17 und die Langlöcher 15, 16 bilden eine elastische Antriebsverbindung der beiden Stützen 3, 12. Über die Antriebsverbindung 15, 16, 17, 22 hebt die zweite Stütze 12 die erste Stütze 3 mit an und senkt sie mit ab. Die zweite Stütze 12 kann auch als antreibende Stütze 12, die erste Stütze 3 auch als angetriebene Stütze 3 bezeichnet werden.

Seitlich neben der dreiecksförmigen Nase 14 weist die zweite Stütze 12 kugelförmige Ansenkungen 18 auf einer gedachten Kreisbahn um die Achsen der Schwenklager 5, 13 auf. Sie wirken zusammen mit einem Rastkörper 19, der im Gehäuse 2 radial zu den Achsen der Schwenklager 5, 13 beweglich gehalten ist. Ein Federelement 20 beaufschlagt den Rastkörper 19 in die Ansenkungen 18 der zweiten Stütze 12. Eine den Ansenkungen 18 zugewandte Stirnseite des Rastkörpers 19 ist halbkugelförmig gerundet. Der federbeaufschlagte Rastkörper 19 und die Ansenkungen 18 bilden eine Arretierung gegen eine selbsttätige Bewegung der zweiten Stütze 12. Die Arretierung 18, 19, 20 hält die zweite Stütze 12 in ihrer jeweiligen Schwenkstellung.

Die zweite Stütze 12 lässt sich aus der angehobenen, in Figur 2 dargestellten Stellung weiter nach oben und außen schwenken, wie es in Figur 3 dargestellt ist. Dadurch vergrößert sich ihr Abstand von einer gegenüberliegenden Seite der als Ring ausgebildeten ersten Stütze 3 und somit eine lichte Weite der Einstellöffnung 4. Dadurch ist eine Anpassung an Getränkebehälter unterschiedlichen Durchmessers möglich. Die erste Stütze 3 verbleibt in ihrer nach oben geschwenkten, angehobenen Stellung, wenn die zweite Stütze 12 aus der in Figur 2 dargestellten, angehobenen Stellung weiter nach oben und außen und auch wieder zurück in die angehobene Stellung gemäß Figur 2 verschwenkt wird.

Die zweite Sperrfläche 11 an der Unterseite des als Schieber ausgebildeten Sperrelements 7, die die erste Stütze 3 gegen Absenken aus der angehobenen Stellung sperrt, verläuft nicht radial zur gedachten Achse des Schwenklagers 5, sondern in einem Winkel schräg dazu. Dadurch lässt sich das Sperrelement 7 überdrücken, d. h. durch kräftiges Drücken lässt sich die erste Stütze 3 entriegeln und nach unten schwenken. Der Winkel, unter dem die zweite Sperrfläche 11 schräg zu einer Radialen der Schwenkachse verläuft, ist spitzer als der Winkel der schrägen Flächen der dreiecksförmigen Nase 14 der zweiten Stütze 12, die normalerweise das Sperrelement 7 bzw. die erste Stütze 3 entsperrt. Die Kraft bzw. das Moment zum Überdrücken des Sperrelements 7 und Nachuntendrücken der ersten Stütze 3 ist deswegen höher als an der zweiten Stütze 12. Die Möglichkeit des Überdrückens verhindert eine Beschädigung des Halters 1 durch (zu) kräftiges Nachuntendrücken. Ein unbeabsichtigtes Nachuntendrücken der ersten Stütze 3 mit geringerer Kraft wird trotzdem vermieden.

## Patentansprüche

1. Halter für einen Getränkebehälter, mit einer ersten Stütze (3), die aus einer abgesenkten in eine angehobene Stellung und umgekehrt bewegbar ist, wobei die erste Stütze (3) in der angehobenen Stellung einen in den Halter (1) eingestellten Getränkebehälter seitlich an einer Stelle abstützt, wobei der Halter (1) eine zweite Stütze (12) aufweist, die ebenfalls aus einer abgesenkten in eine angehobene Stellung und umgekehrt bewegbar ist. wobei die zweite Stütze (12) in der angehobenen Stellung einen in den Halter (1) eingestellten Getränkebehälter seitlich an einer anderen Stelle seines Umfangs als die erste Stütze (3) abstützt, wobei die erste Stütze (3) mit der zweiten Stütze (12) antriebsverbunden ist, so dass die zweite Stütze (12) beim Anheben die erste Stütze (3) mit anhebt und/oder beim Absenken mit absenkt, wobei der Halter (1) ein Sperrelement (7) aufweist, das in der angehobenen und/oder In der abgesenkten Stellung mit der ersten Stütze (3) federbeaufschlagt in Eingriff tritt und diese **dadurch** gegen eine Bewegung sperrt und wobei die zweite Stütze (12) beim Anheben oder Absenken das Sperrelement (7) entsperrt, so dass die erste Stütze (3) bewegbar ist **dadurch gekennzeichnet, dass** die erste Stütze (3) mit der zweiten Stütze (12) mittels eines Federelements (17) oder eines gummielastischen Elements elastisch miteinander verbunden sind, derart, dass eine Antriebsverbindung (14, 15, 16, 17) der ersten Stütze (3) mit der zweiten Stütze (12) ein Bewegungsspiel aufweist, insbesondere elastisch Ist.

2. Halter nach Anspruch 1, **dadurch gekennzeichnet, dass** das Sperrelement (7) durch kräftiges Drücken der angehobenen ersten Stütze (3) nach unten überdrückbar ist.

3. Halter nach Anspruch 1, **dadurch gekennzeichnet, dass** der Halter (1) eine Arretierung (18, 19, 20) gegen selbsttätige Bewegung der zweiten Stütze (12) aufweist.

4. Halter nach Anspruch 1, **dadurch gekennzeichnet, dass** ein Abstand der beiden angehobenen Stützen (3, 12) voneinander verstellbar ist.

5. Halter nach Anspruch 1, **dadurch gekennzeichnet, dass** mindestens eine der beiden Stützen (3, 12) ein Schwenklager (5, 13) aufweist, so dass sie durch Schwenken anhebbar und absenkbar ist.

6. Halter nach Anspruch 5, **dadurch gekennzeichnet, dass** beide Stützen (3, 12) Schwenklager (5, 13) aufweisen, die sich auf derselben Seite eines in den Halter (1) eingestellten Getränkebehälters befinden.

7. Halter nach Anspruch 1, **dadurch gekennzeichnet, dass** die erste Stütze (3) ein Ring ist.

## Claims

1. Holder for a drinks container, having a first support (3), which is movable from a lowered position into a raised position and *vice versa,* the first support (3), in the raised position, providing a drinks container inserted in the holder (1) with support at a location laterally, wherein the holder (1) has a second support (12), which is likewise movable from a lowered position into a raised position and *vice versa,* the second support (12), in the raised position, providing a drinks container inserted in the holder (1) with support laterally at a different location on its periphery to the first support (3), wherein the first support (3) is so connected in terms of drive to the second support (12) that the second support (12), on being raised, raises the first support (3) along with it and/or, on being lowered, lowers the first support (3) along with it, wherein the holder (1) has a locking element (7) which in the raised and/or lowered position comes into engagement with the first support (3) under spring bias and, as a result, locks it against movement, and wherein the second support (12), on being raised or lowered, unlocks the locking element (7) so that the first support (3) is movable, **characterised in that** the first support (3) and the second support (12) are resiliently connected to one another by means of a spring element (17) or a resilient rubber element in such a manner that a drive connection (14, 15, 16, 17) of the first support (3) to the second support (12) has movement-allowing play, and especially is resilient.

2. Holder according to claim 1, **characterised in that** the locking element (7) is arranged to be overpowered by pushing down the raised first support (3) with force.

3. Holder according to claim 1, **characterised in that** the holder (1) has a stopping arrangement (18, 19, 20) against the second support (12) moving of its own accord.

4. Holder according to claim 1, **characterised in that** the spacing of the two raised supports (3, 12) from one another is adjustable.

5. Holder according to claim 1, **characterised in that** at least one of the two supports (3, 12) has a pivotal mount (5, 13) so that it can be raised and lowered as a result of pivoting.

6. Holder according to claim 6, **characterised in that** both supports (3, 12) have pivotal mounts (5, 13), which are located on the same side of a drinks container inserted in the holder (1).

7. Holder according to claim 1, **characterised in that** the first support (3) is a ring.

## Revendications

1. Support pour un récipient à boissons, avec un premier élément de soutien (3) qui peut être déplacé d'une position abaissée dans une position relevée et vice versa, sachant que le premier élément de soutien (3), dans la position relevée, soutient latéralement en un point un récipient à boissons mis en place dans le support (1), sachant que le support (1) présente un deuxième élément de soutien (12) qui peut lui aussi être déplacé d'une position abaissée dans une position relevée et vice versa, sachant que le deuxième élément de soutien (12), dans la position relevée, soutient un récipient à boissons mis en place dans le support (1) latéralement en un autre point de son pourtour que le premier élément de soutien (3), sachant que le premier élément de soutien (3) est relié en entraînement au deuxième élément de soutien (12), de sorte que le deuxième élément de soutien (12) relève conjointement le premier élément de soutien (3) lors de son relèvement et/ou l'abaisse conjointement lors de son abaissement, sachant que le support (1) présente un élément de blocage (7) qui, dans la position relevée et/ou dans la position abaissée, entre en engagement avec le premier élément de soutien (3) en étant sollicité par ressort et bloque ainsi le déplacement de celui-ci, et sachant que le deuxième élément de soutien (12), lors du relèvement ou de l'abaissement, débloque l'élément de blocage (7), de sorte que le premier élément de soutien (3) peut être déplacé, **caractérisé en ce que** le premier élément de soutien (3) et le deuxième élément de soutien (12) sont reliés élastiquement entre eux au moyen d'un élément formant ressort (17) ou d'un élément ayant l'élasticité du caoutchouc, de telle sorte qu'une liaison d'entraînement (14, 15, 16, 17) du premier élément de soutien (3) avec le deuxième élément de soutien (12) présente un jeu de mouvement, en particulier est élastique.

2. Support selon la revendication 1, **caractérisé en ce que** l'élément de blocage (7) peut être surmonté en exerçant une forte pression vers le bas sur le premier élément de soutien relevé (3).

3. Support selon la revendication 1, **caractérisé en ce que** le support (1) présente un dispositif d'arrêt (18, 19, 20) pour empêcher le déplacement spontané du deuxième élément de soutien (12).

4. Support selon la revendication 1, **caractérisé en ce que** la distance entre les deux éléments de soutien relevés (3, 12) est réglable.

5. Support selon la revendication 1, **caractérisé en ce qu'**au moins un des deux éléments de soutien (3, 12) présente un palier de pivotement (5, 13), de sorte qu'il peut être relevé et abaissé par pivotement.

6. Support selon la revendication 5, **caractérisé en ce que** les deux éléments de soutien (3, 12) présentent des paliers de pivotement (5, 13) qui se trouvent sur le même côté d'un récipient à boissons mis en place dans le support (1).

7. Support selon la revendication 1, **caractérisé en ce que** le premier élément de soutien (3) est une bague.
